(19) Europäisches Patentamt
European Patent Office
Office européen des brevets

(11) **EP 3 415 759 B1**

(12) **EUROPÄISCHE PATENTSCHRIFT**

(45) Veröffentlichungstag und Bekanntmachung des Hinweises auf die Patenterteilung:
**02.12.2020   Patentblatt 2020/49**

(51) Int Cl.:
***F04B 43/00*** *(2006.01)*          *B29C 70/88* *(2006.01)*
*F16K 37/00* *(2006.01)*          *F16J 3/02* *(2006.01)*
*G01L 19/06* *(2006.01)*

(21) Anmeldenummer: **18175987.9**

(22) Anmeldetag: **05.06.2018**

(54) **MEMBRAN MIT LEITFÄHIGEN STRUKTUREN**

MEMBRANE WITH CONDUCTIVE STRUCTURES

MEMBRANE DOTÉE DES STRUCTURES CONDUCTRICES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2017   DE 102017112919**

(43) Veröffentlichungstag der Anmeldung:
**19.12.2018   Patentblatt 2018/51**

(73) Patentinhaber: **SISTO Armaturen S.A.**
**6468 Echternach (LU)**

(72) Erfinder: **SCHAAL, Andreas**
**6468 Echternach (LU)**

(74) Vertreter: **Busch, Tobias et al**
**Anwaltskanzlei Busch & Kollegen**
**Schlossergasse 4**
**67227 Frankenthal (DE)**

(56) Entgegenhaltungen:
WO-A2-2012/035291          DE-A1- 10 024 118
GB-A- 2 433 298             US-A- 5 560 279
US-A1- 2005 115 402        US-A1- 2016 069 474
US-B1- 6 498 496

**Beschreibung**

Die Erfindung betrifft eine Membran, insbesondere für Membranventile, Membranpumpen oder Membranantriebe, wobei die Membran eine Anordnung umfasst, die leitfähige Strukturen aufweist.

Solche Membranen werden beispielsweise in Membranventilen, in Membranantrieben oder Membranpumpen eingesetzt. Bei Membranventilen dichtet die Membran das Ventil vorzugsweise auf einem Dichtsteg ab. Ein solches Membranventil wird beispielsweise in der DE 195 05 747 A1 beschrieben. Bei einer Membranpumpe wird das zu fördernde Medium durch die Membran vom Antrieb getrennt. Membranantriebe kommen beispielsweise in Form pneumatischer Antriebe bei Stellarmaturen zum Einsatz. Dabei wird eine vorzugsweise mit einer Spindel gekoppelte Membran über Druckluft bewegt.

Die in diesen Anwendungen eingesetzten Membranen bilden bewegliche, dichtende Wände, die mindestens zwei Räume voneinander trennen. Auf den beiden Seiten der getrennten Räume können auch unterschiedliche Medien vorliegen bzw. unterschiedliche Druckverhältnisse herrschen.

Ein wichtiges Qualitätsmerkmal der Membran sind die Stabilität und die Beweglichkeit. Die Membran führt meist senkrecht zu einer Einspannfläche einen Hub aus, der mechanisch bedingt sein kann oder infolge einer Druckdifferenz erfolgt. Für die Lebensdauer der jeweiligen Vorrichtung ist die Beständigkeit der Membran von großer Bedeutung. Der Ausfall einer Membran während des Produktionsprozesses bedingt den Stillstand der jeweiligen Anlage und kann zu hohen Kosten führen. Um die Ausfallwahrscheinlichkeit zu senken wird üblicherweise ein vorbeugender Membranwechsel durchgeführt, wobei größtenteils vollfunktionsfähige Membranen ausgetauscht werden. Dennoch ist es möglich, dass zum Beispiel durch einen Riss die Membran zwischen zwei Wartungen zerstört wird und eine Leckage auftritt.

Mit einer Überwachung der Membran können die Wechselintervalle optimiert werden. Das heißt, die Membran kann erst kurz bevor sie die Grenze vom "Gut-zum-Schlechtzustand" überschritten hat, ausgetauscht werden. Eine Kontamination des Mediums infolge von schlecht zu reinigenden Stellen in der defekten Membran wird dadurch ebenfalls verhindert.

In der DE 10 2009 023 012 A1 wird eine Membran für Membranventile beschrieben, die einen Sensor zur Überlastungs- bzw. Verschleißkontrolle aufweist. Dabei handelt es sich um einen Textilsensor aus einem leitfähigen Nano-Komposit-Material. Alternativ wird eine Variante beschrieben mit einem Textilsensor in Form eines Dehnungssensors aus Silikon. Auch werden in der Patentanmeldung Sensoren beschrieben, die fadenförmig ausgebildet sind.

Die DE 10 2014 205 117 A1 betrifft eine Membran und ein Verfahren zur deren Herstellung. Die Membran weist mindestens zwei Lagen auf, von denen mindestens eine aus einem Elastomer besteht. Zwischen den beiden Lagen ist eine elektrische Schaltung angeordnet. In mindestens einer der beiden Lagen sind leitfähige Einlagen vorhanden, mit der eine elektrische Verbindung der elektrischen Schaltung außerhalb der Membran erreichbar ist. Die leitfähige Einlage enthält Partikel, die in das Material der betroffenen Lage eingebracht sind.

Die DE 40 27 027 C2 beschreibt ein Verfahren zur Erkennung einer Bruchstelle in einer aus mindestens zwei Einzelmembranen bestehenden Membranfördereinheit. Die Bruchstelle in der Membran wird in einem statischen Bereich der Membran mittels einer Verformung erfasst.

Die EP 0 715 690 B1 beschreibt eine flexible Pumpenmembran mit einer Schicht, die ein poröses Polytetrafluorethylen umfasst. In die Polytetrafluorethylen-Schicht ist eine elektrisch leitende Faser aus expandiertem, porösem Polytetrafluorethylen eingebettet.

Die US 4,569,634 beschreibt ein System zum Erfassen eines Versagens einer Membran. Dabei kommen leitfähige Strukturen aus Grafit zum Einsatz.

Die DE 100 24 118 A1 beschreibt eine Einrichtung zur Überwachung der Unversehrtheit einer Membran in einer Fördereinheit. Die Membran weist eine Widerstandseinrichtung auf, die mit einer Messeinrichtung zusammengeschaltet ist. Bei der Messeinrichtung handelt es sich um eine wheatstonesche Brücke.

In der DE 103 23 059 A1 wird eine Sensormembran mit mehreren sandwichartig übereinander angeordneten Membranlagen beschrieben. Die Membranlagen umfassen eine elektrisch leitfähige Membranlage und eine darunter angeordnete elektrisch isolierende Membranlage.

Obwohl im Stand der Technik zahlreiche Systeme zur Überwachung einer Membran bekannt sind, hat sich bisher kein System dauerhaft am Markt etabliert. Dies liegt unter anderem daran, dass herkömmliche Systeme zur Membranüberwachung häufig sehr kostspielig sind bzw. die Beweglichkeit oder die Lebensdauer der Membran einschränken.

Aus der WO 2012/035291 ist ein Sensorsystem zur Detektion von Leckagen in einer Membran bekannt, wobei das System ein Sensorelement umfasst, das wiederum eine Fluid-Sensing-Komponente aus einem elektrisch leitenden Polymer aufweist. Das Sensorsystem umfasst ferner einen Messschaltkreis zum Messen des elektrischen Widerstandes des elektrisch leitenden Polymers.

Aufgabe der Erfindung ist es eine Membran anzugeben, die eine Anordnung mit leitfähigen Strukturen aufweist mit deren Hilfe die Membran zuverlässig auf Ermüdungserscheinungen überwacht werden kann bzw. weitere Zustände der jeweiligen Vorrichtung beispielsweise des Membranventils erfasst werden können. Die Membran soll sich durch eine hohe Beweglichkeit und eine lange Lebensdauer auszeichnen. Zudem soll die Membran möglichst preiswert herzustellen sein und eine hohe Lebensdauer aufweisen sowie einen zuverlässigen Betrieb gewährleisten.

Diese Aufgabe wird erfindungsgemäß durch eine Membran mit den Merkmalen des Anspruchs 1 gelöst sowie ein Verfahren zur Herstellung der Membran gemäß Anspruch 12. Bevorzugte Varianten sind den Unteransprüchen, der Beschreibung und den Zeichnungen zu entnehmen.

Erfindungsgemäß ist in die Membran ein Sensor integriert, der leitfähige Strukturen aufweist. Vorzugsweise werden die leitfähigen Strukturen vor einer Vulkanisation auf eine Lage der Membran mit einer Tinte aufgedruckt. Der elektrische Widerstand der leitfähigen Strukturen wird mit einer Messeinrichtung erfasst. Der elektrische Widerstand ist in der Regel temperatur- und dehnungsabhängig. Durch Vergleich des Widerstands mit einer Sollkurve kann eine unzulässig hohe Dehnung erkannt werden. Ein Riss der Membran wird beispielsweise durch einen unendlich hohen Widerstand erkannt. Bei einer Variante wird durch eine redundante Anordnung der leitfähigen Strukturen in mehreren Ebenen eine Tiefe des Risses erkannt. Kleine Risse werden erkannt, da sich die leitfähigen Strukturen durch Kontakt mit dem Arbeitsmedium, also dem Medium, das in der Membranpumpe gefördert oder im Membranventil geregelt wird, auflöst. Erfindungsgemäß ist die leitfähige Struktur mittels einer Tinte aufgebracht, die an die grundsätzliche Nutzung der Membran angepasst werden kann.

Bei der Tinte zur Erzeugung der leitfähigen Strukturen handelt es sich vorzugsweise um eine Suspension von Partikeln eines elektrisch leitfähigen Werkstoffs bzw. einer Vorgängerverbindung für einen elektrisch leitfähigen Werkstoff, die in einem Lösemittel verteilt sind. Die Tinte kann beispielsweise elektrisch leitfähige Polymere, Metalle oder Metalloxide, Kohlenstoffpartikel oder Halbleiter enthalten. Bevorzugt ist eine Tinte, die Nanopartikel eines leitfähigen Materials, insbesondere von Kohlenstoffnanoröhren und/oder Partikel dispergiert in einem Lösemittel, beispielsweise Wasser, enthält, die durch Versintern zu einer durchgehend leitenden Struktur führen. Besonders bevorzugt enthält die Tinte Nanopartikel aus Silber in Wasser, die durch Versintern der Silberpartikel zu einer durchgehend leitenden Struktur führen.

Als Grundwerkstoffe für die Membran kommen vorzugsweise Elastomere zum Einsatz, die zur Erzielung einer höheren Festigkeit mit Gewebeeinlagen verstärkt werden können. Bei einer Variante der Erfindung wird die Membran aus mehreren Lagen durch Vulkanisation zu einer Einheit konfektioniert.

Vorzugsweise sind die leitfähigen Strukturen auf einer medienberührenden Lage, auf deren medienabgewandten Seite angeordnet.

Als Elastomere haben sich Membranen mit Ethylen-Propylen-Dien-Kautschuk (EPDM) bewährt. Bei Ethylen-Propylen-Dien-Kautschuk (EPDM) handelt es sich um teerpolymere Elastomere (Gummi) und somit um synthetische Kautschuke. Das Material zeichnet sich durch eine hohe Elastizität und eine gute chemische Beständigkeit aus.

Bei einer besonders günstigen Ausführung der Erfindung wird die unterste, medienberührende Lage der Membrane möglichst dünn ausgelegt, sodass auf dieser Lage auf der medienabgewandten Seite eine leitfähige Struktur mit einer Tinte gedruckt werden kann.

Ergänzend oder alternativ können leitfähige Strukturen auch auf eine dünne Trägerfolie gedruckt werden, die dann zusammen mit den anderen Elastomer-Lagen vulkanisiert werden.

Es ist ebenfalls vorstellbar, dass die leitfähigen Strukturen auf eine Gewebeeinlage gedruckt werden oder die auf eine Trägerfolie gedruckten leitfähigen Strukturen auf die Gewebeeinlage geklebt werden.

Bei einer Variante der Erfindung ist die Membran mediumseitig fest mit einem vorbehandelten PTFE-Element (Polytetrafluorethylen) oder einem Element aus modifizierten PTFE.

Dabei handelt es sich vorzugsweise um eine zweiteilige Membran, bestehend aus einer EPDM-Stützmembran und einer medienberührenden PTFE-Membran. Die leitfähigen Strukturen können auf die Rückseite der PTFE-Membran bedruckt werden und/oder bei einer PTFE-kaschierten Membran auf die Rückseite einer PTFE-Folie gedruckt werden.

Bei einer besonders vorteilhaften Variante der Erfindung wird eine Tinte eingesetzt, die ohne Nachsintern auskommt bzw. eine Tinte mit einem Nachsintern bei deutlich geringeren Temperaturen von vorzugsweise weniger als 140°C. Dies hat den Vorteil, dass bei der Herstellung keine Schäden am Elastomer durch zu hohe Temperaturen verursacht werden. Vorzugsweise werden die leitfähigen Strukturen mit Tintenstrahldruckern aufgedruckt.

Für die leitfähigen Strukturen sind unterschiedliche Anordnungen denkbar. Bei einer Variante der Erfindung sind die leitfähigen Strukturen spiralförmig angeordnet. Auch eine Anordnung der leitfähigen Strukturen als bogenförmige Leiterelemente ist denkbar. Vorzugsweise sind die leitfähigen Strukturen an den außenliegenden Enden mit einem Stromkreis verbunden. Bei einer Variante der Erfindung sind die leitfähigen Strukturen aus Leiterelementen ausgebildet, die von außen zur Mitte bogenförmig verlaufen. Die einzelnen Glieder sind außen und in der Mitte miteinander verbunden. Vorzugsweise wird dabei die Leiteranordnung von außen kontaktiert.

Bei einer Variante der Erfindung sind die leitfähigen Strukturen in mindestens zwei Segmente aufgeteilt. Dabei sind Leiteranordnungen denkbar, welche die Membran in parallel gestalteten Segmente aufteilen, sodass ein Defekt auf einem Bereich der Membran eingegrenzt werden kann.

Ergänzend oder alternativ können zwei oder mehrere beliebig ausgeführte leitfähige Strukturen als Leiteranordnungen in übereinander liegenden Ebenen angeordnet sein. Diese können beispielsweise parallel verschaltet werden. Dadurch kann die Tiefe eines Risses erkannt werden. Wenn die Membranüberwachung lediglich den Riss der untersten Leiteranordnung meldet, kann die Membran je nach Anwendung noch längere Zeit weiter verwendet werden und die Anlage muss nicht sofort heruntergefahren werden. Erst wenn eine zweite oder dritte Leiteranordnung reißt kann dann ein Tausch der Membran erfolgen.

Bei einer Variante der Erfindung wird der Widerstand der leitfähigen Strukturen überwacht. Durch einen Riss in der Membran wird der Stromkreis der Leiteranordnung unterbrochen, was beispielsweise durch einen unendlich hohen Widerstand feststellbar ist.

Um die Membranüberwachung temperaturunabhängig zu gestalten, kann eine wheatstonesche Brücke beispielsweise in Halbbrücken- oder Vollbrückenschaltung verwendet werden. Dazu erweist es sich als vorteilhaft, wenn die leitfähigen Strukturen in zwei bzw. vier Teile gleicher Länge aufgeteilt sind, sodass alle Teile dem gleichen Temperatureinfluss unterliegen. Um den gleichen Temperatureinfluss bei allen Teilen der Brückenschaltung zu gewährleisten, erstreckt sich vorzugsweise jeder Schaltungsteil über beide Kammern der Membran, sodass einseitig anstehendes Medium mit höherer Temperatur alle leitfähigen Strukturen gleich stark erwärmt. Die Brückenschaltung gleicht außerdem langzeitige Veränderungen bspw. durch eine allmähliche Änderung des spezifischen Widerstands des Leitermaterials aus. Durch die Schaltung wird eine Widerstandsänderung in eine Spannungsänderung umgewandelt. Vorzugsweise kommt eine Schaltung zum Einsatz, die eine Diagonalspannung überwacht.

Bei einer besonders vorteilhaften Variante der Erfindung wird die erfindungsgemäße Membran dazu genutzt, um die Stellung eines Ventils zu erfassen. Ist das Ventil geöffnet, so wirkt an allen Stellen der Membran derselbe Druck und die Dehnung der Membran bzw. der leitfähigen Strukturen wird bei jedem Druck beispielsweise durch eine Brückenschaltung kompensiert. Ist das Ventil geschlossen, so ist der Druck des Mediums auf der einen Seite höher als auf der anderen. Dies macht sich in einer Dehnung der Membran und somit in einem veränderten Widerstand in den leitfähigen Strukturen der Leiteranordnung bemerkbar. Beispielsweise kann eine veränderte Diagonalspannung erfasst werden. Somit kann die Vorrichtung in Abhängigkeit des Druckunterschiedes der beiden Kammern dazu benutzt werden, über die unterschiedliche Dehnung der Leitersegmente in den beiden Kammern die Geschlossen-Stellung des Ventils zu erfassen.

Zur sicheren Erfassung der "Geschlossen-Stellung" des Ventils unabhängig vom Mediendruck kann ebenfalls in dem zuvor beschriebenen Verfahren eine Schaltung im Bereich der dynamischen Dichtung in die Membran eingebracht werden. Beispielsweise können die leitfähigen Strukturen so angeordnet werden, dass eine Leiteranordnung so positioniert ist, dass ein Großteil der Leiterlänge in Betätigungsrichtung des Ventils liegt. Wird das Ventil geschlossen, so wird der Leiter gestaucht, wobei sich der elektrische Widerstand verringert. Ähnlich wie bei einem Dehnungsmessstreifen kann aus dem Widerstand die Dehnung und über die entsprechenden Kennwerte auch die Spannung berechnet werden. Somit kann neben der Positionskontrolle auch eine Überwachung der Schließkräfte und damit der Dichtheit des Ventils erfolgen.

Die Auswertung der Messgröße der leitfähigen Strukturen kann beispielsweise binär erfolgen. Alternativ ist auch eine stetige Messgröße erfassbar. Für die binäre Auswertung wird für jede Leiterebene der leitfähigen Strukturen lediglich ein Vergleichelement benötigt, vorzugsweise für einen Vergleich mit einer Sollkurve, bzw. einem Schwellenwert. Das Ausgangssignal der Membran ist dann ein binäres Signal. Das Signal kann auch digital übermittelt werden, was die Übertragung von mehreren Informationen ermöglicht. Der Zustand bzw. der Verschleiß der Membran kann als stetige Größe beispielsweise zwischen 0 und 100 % angegeben werden. Eine digitale Signalübertragung erlaubt es außerdem, die Information über den Rissfortschritt oder den betroffenen Bereich zu übermitteln.

Der Druck ist auf vielen und vor allem auch auf elastischen Trägermaterialien (Substraten), möglich. Zum Einsatz kommen entweder berührende Verfahren wie Siebdruck oder nicht-berührende, maskenlose Verfahren wie Inkjet-Druck oder Aerosoljet-Druck. Das zu druckende Material liegt in flüssiger Form vor. Es werden Metalllegierungen, Kohlenstoffverbindungen oder leitfähige Polymere verwendet. Beispielsweise kann eine mit Nanoteilchen versetzte Tinte eingesetzt werden, die den Vorteil hat, dass sie ohne Nachsintern bzw. mit einem Nachsintern bei deutlichen geringeren Temperaturen (140 °C) als üblich auskommt. Dadurch kann der Prozess keine Schäden am Elastomer durch zu hohe Temperaturen verursachen. Die Tinten erreichen einen spezifischen Widerstand von 2-10-2 $\Omega$*cm. Im Gegensatz zu metallischen Trägermaterialien muss für den Druck des Sensors auf dem Elastomerwerkstoff keine Isolationsschicht eingeplant werden. Damit kann eine Dicke von unter 10 $\mu$m erreicht werden.

Eine andere Möglichkeit ist, ein leitfähiges Elastomer in Strangform in die Membrane einzubringen. Dieses könnte vor der Vulkanisation in geeigneter Form zwischen die Schichten der Membrane gelegt werden und würde während des Formpressens durch Vernetzung fest mit dem Membranwerkstoff verbunden. Ein großer Vorteil für die Lebensdauer sind dabei die ähnlichen Materialeigenschaften. Gegenüber dem Druckverfahren ist dieses Verfahren schwieriger zu automatisieren, da die Leiteranordnung vermutlich manuell auf die unterste Membranlage angeordnet werden müsste. Demgegenüber kann der Schaltkreis bei dem Druckverfahren direkt aus einer CAD-Datei auf die Membranlage gedruckt werden.

Zur Integration dieses Sensorprinzips sollte die unterste, medienberührende Lage der Membrane möglichst dünn ausgelegt werden, sodass auf dieser Lage auf der medienabgewandten Seite die Leiteranordnung angeordnet werden kann. Durch die mediennahe Messung steigt die Wahrscheinlichkeit, dass schon geringe Fehler wie flache Risse, flache Falten oder sogar eine Verformung der Niere messbar werden.

Für das Druckverfahren ist es ebenfalls vorstellbar, dass die Leiteranordnung auf eine dünne Trägerfolie gedruckt wird, die dann zusammen mit den anderen Elastomerlagen vulkanisiert wird. Für die zweiteilige Membrane, bestehend aus einer EPDM-Stützmembrane und einer medienberührenden TFM-Membrane kann die Leiteranordnung auf die Rückseite der TFM-Membrane gedruckt werden bzw. bei der TFM-kaschierten Membrane auf die Rückseite der TFM-Folie gedruckt werden. Bei allen Varianten kann die Leiteranordnung durch leitfähigen Kleber kontaktiert werden.

Weitere Merkmale und Vorteile der Erfindung ergeben sich aus der Beschreibung von Ausführungsbeispielen anhand von Zeichnungen und aus den Zeichnungen selbst.

Dabei zeigt:

Figur 1 eine Schnittdarstellung eines Membranventils,

Figur 2 eine Schnittdarstellung einer Membran,

Figur 3 leitfähige Strukturen als Spirale,

Figur 4 leitfähige Strukturen als bogenförmige Leiterelemente,

Figur 5 eine Anordnung leitfähiger Strukturen zur Positionserkennung,

Figur 6 eine Aufteilung einer Leiteranordnungen in Segmente,

Figur 7 ein Schema einer Anordnung zur Auswertung mit einer wheatstoneschen Brückenschaltung,

Figur 8 eine Draufsicht auf eine Membran.

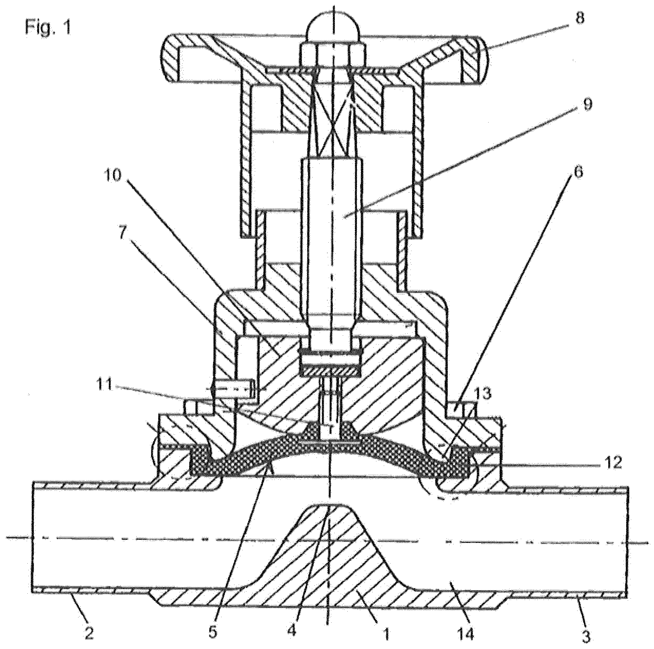

Das in Figur 1 dargestellte Membranventil besitzt ein Gehäuseunterteil 1, welches Anschlüsse 2, 3 und ein Steg 4 umfasst, der auch als Wehr bezeichnet wird. Der Steg 4 dient als Sitzfläche für die Membran 5. Die Membran 5 ist mithilfe von Schrauben 6 eingespannt zwischen dem Gehäuseunterteil 1 und einem Gehäuseoberteil 7. Im Gehäuseoberteil 7 sind die zur Betätigung der Membran 5 notwendigen Elemente integriert, wie beispielsweise ein Antrieb 8, der im Ausführungsbeispiel als Handrad ausgeführt ist sowie eine Spindel 9. An der Spindel 9 ist ein Druckstück 10 befestigt. Das Druckstück 10 ist verschieblich im Gehäuseoberteil 7 angeordnet und wird von einer inneren Wand des Gehäuseoberteils 7 geführt. Durch Betätigung des Antriebs 8 wird über die Spindel 9 eine horizontale Verschiebung des Druckstücks 10 bewirkt, sodass die Membran 5 verformt und der freie Querschnitt zwischen dem Wehr 4 und der Membran 5 vergrößert bzw. verkleinert wird.

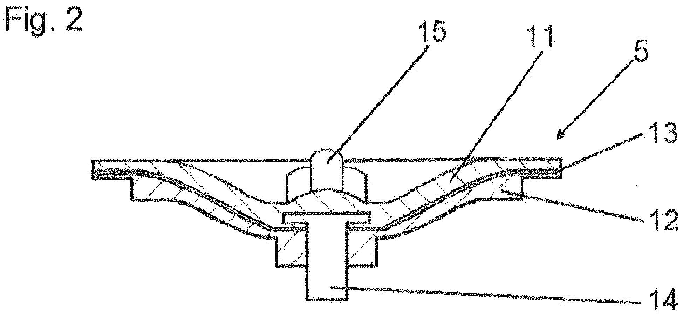

Figur 2 zeigt eine Schnittdarstellung einer Membran 5. Die Membran umfasst eine erste Lage 11, die auf der Mediumseite angeordnet ist. Weiterhin umfasst die Membran 5 eine zweite Lage 12, welche die Rückseite der Membrananordnung bildet. Die beiden Membranen 11 und 12 sind aus einem Elastomer gefertigt. Zwischen den beiden Elastomer-Lagen 11, 12 ist eine Verstärkungsanordnung 13 angeordnet. Weiterhin umfasst die Membran 5 ein stiftartiges Element 14, das im Ausführungsbeispiel als Membranschraube ausgebildet ist.

Die erste Lage der Membran 5, die der Mediumseite zugewandt ist, weist eine Dichtlippe 15 auf. Das in Figur 2 dargestellte stiftartige Element 14 kann ein Gewinde aufweisen. Gemäß der Darstellung in Figur 1 ist das stiftartige Element 14 als Membranschraube ausgebildet und weist ein Außengewinde auf, das in ein Innengewinde eingeschraubt wird, welches in dem Druckstück 10 ausgebildet ist. Bei der Membran 5, gemäß der Darstellung in Figur 2, handelt es sich um ein Compound aus zwei Elastomer-Lagen 11, 12 und einer dazwischen angeordneten Verstärkungsanordnung 13, die miteinander vorzugsweise durch Vulkanisation verbunden sind.

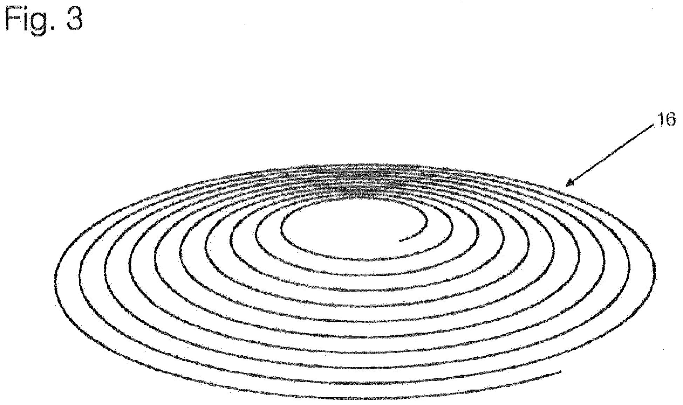

Figur 3 zeigt eine Leiteranordnung aus leitfähigen Strukturen 16, die als durchgehende Spirale ausgebildet ist. Bei den leitfähigen Strukturen 16 kann es sich um einen metallischen Leiter oder um gedruckte Leiterbahnen, beispielsweise mit einer Silbertinte handeln. Auch ist es denkbar, dass die leitfähigen Strukturen durch Vulkanisation leitfähiger Gummifäden entstehen. In einer Variante sind die leitfähigen Strukturen zwischen den beiden Lagen 11 und 12 der Membran 5 ausgebildet, beispielsweise durch Druck auf einem Elastomer oder durch Druck auf einer Trägerfolie.

Vorzugsweise wird die in Figur 2 dargestellte medienberührende Gummilage 11 nochmals geteilt, sodass sich die Leiteranordnung möglichst nahe an der medienberührenden Membranoberfläche befindet. Dadurch können tendenziell bereits geringe Fehler wie flache Verformungen, flache Falten oder Risse erkannt werden.

Die in Figur 3 dargestellte Leiterspirale ist vorzugsweise über die gesamte Membranfläche ausgebildet. An den außenliegenden Enden werden die leitfähigen Strukturen 16 mit einem Stromkreis kontaktiert.

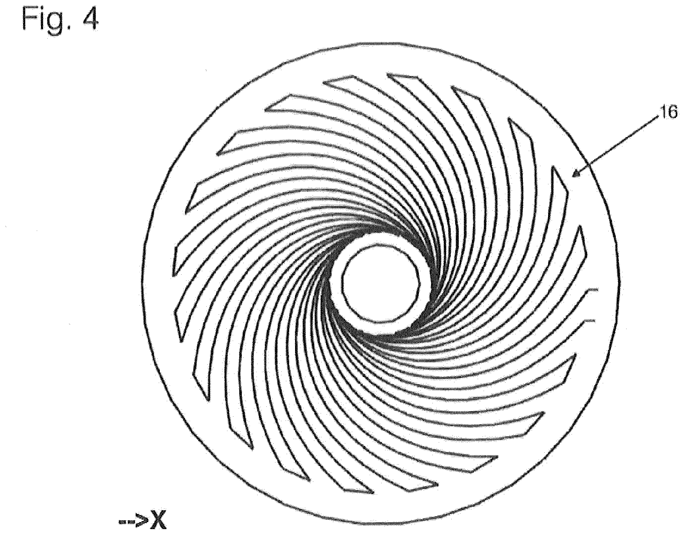

Figur 4 zeigt eine Variante bei der die leitfähigen Strukturen so ausgebildet sind, dass die einzelnen Leiterelemente von außen zur Mitte bogenförmig verlaufen. Die einzelnen Glieder sind außen und in der Mitte miteinander verbunden. Die Leiteranordnung wird außen kontaktiert.

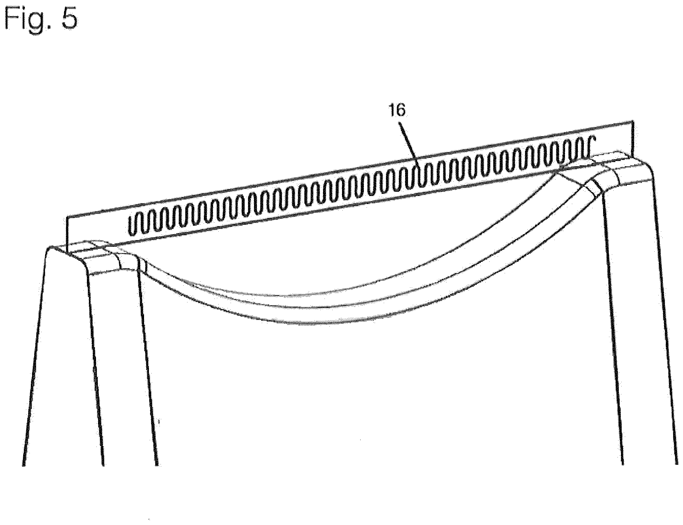

Figur 5 zeigt eine Leiteranordnung mit leitfähigen Strukturen, die auf eine Trägerfolie gedruckt sind und im Bereich der dynamischen Dichtung in die Membran integriert sind. Der Großteil der Leiterlänge liegt in Betätigungsrichtung des Ventils, sodass der Leiter gestaucht wird, wenn das Ventil geschlossen wird. Dadurch verringert sich der elektrische Widerstand des Leiters. Ähnlich wie bei einem Dehnungsmessstreifen kann aus dem Widerstand die Dehnung und mit Kenntnis der Werkstoffkennwerte auch die Spannung berechnet werden. Somit wird neben der der Positionskontrolle auch eine Überwachung der Schließkräfte und damit auch der Dichtheit des Ventils ermöglicht.

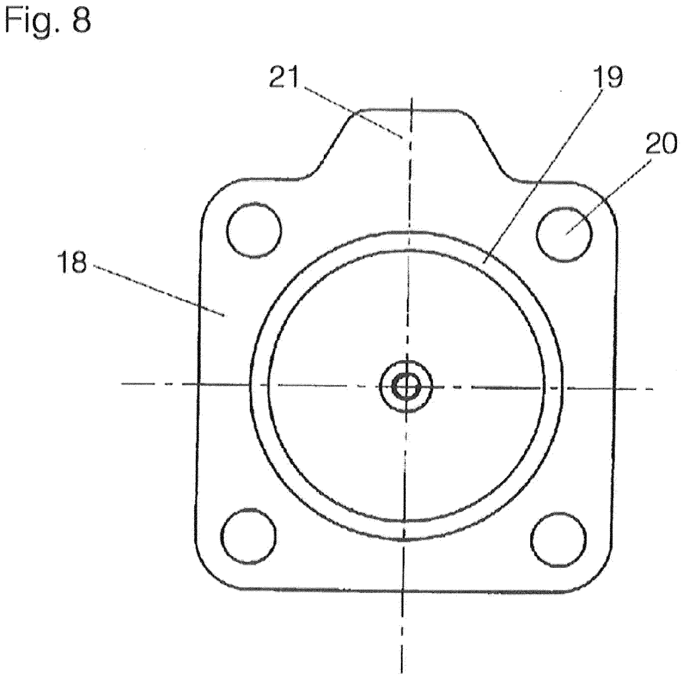

Es können auch Dehnungssensoren eingebracht werden. Bei einer Varianten werden Dehnungssensoren in einer Fahne 21 der Membran 5 integriert, die in Figur 8 dargestellt ist. Damit lässt sich feststellen, wenn sich dieser Bereich, der manchmal auch als Lappen bezeichnet wird, durch starke thermische Beanspruchung zusammenzieht.

Auch die Einbringung eines Dehnungssensors zur Überwachung der Spannungsrelaxation als ein Maß für Alterung ist möglich.

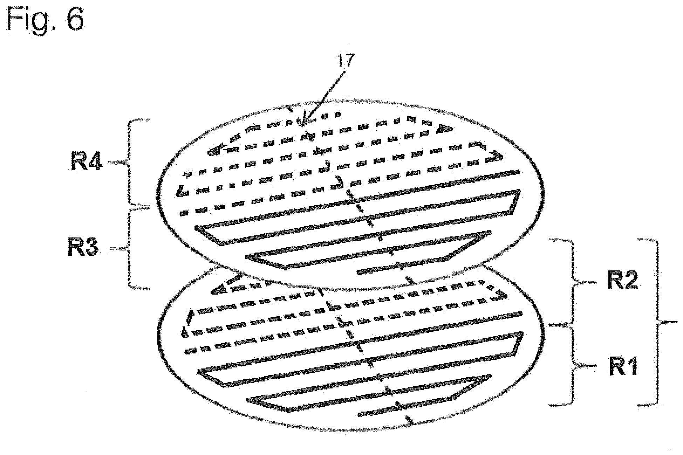

Figur 6 zeigt eine besonders vorteilhafte Variante, in der die Leiteranordnungen in insgesamt vier Segmente aufgeteilt sind. Zwei Segmente sind dabei in einer oberen Ebene und zwei Segmente in einer unteren Ebene positioniert. In jeder Ebene findet noch einmal eine Unterteilung in zwei Hälften statt. Insgesamt können damit vier Widerstände $R_1$, $R_2$, $R_3$ und $R_4$ erfasst werden. Figur 6 zeigt die Position der Dichtlippe 17 der Membran 5.

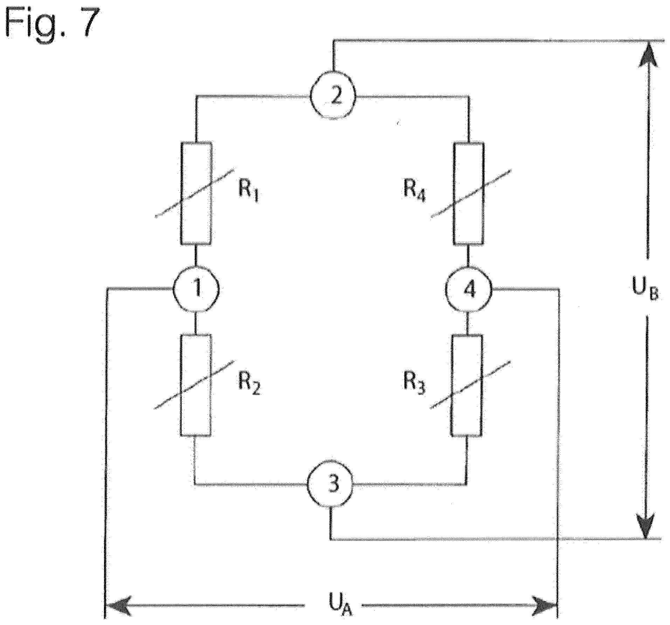

Für die Messaufgabe kann eine in Figur 7 dargestellte Wheatstone'sche Brückengestaltung verwendet werden.

Der Gesamtwiderstand der Überwachungseinheit setzt sich zusammen aus dem Widerstand der Leiteranordnung, der Kontaktstellen und der Auswerte-Einheit. Er kann durch Variation des Widerstands der Leiteranordnung oder durch einen Zusatzwiderstand beeinflusst werden.

Durch die Wahl des Materials und des Fertigungsverfahrens ist der spezifische Widerstand festgelegt. Die bei gegebenem Widerstand zur Verfügung stehende Leiterlänge I kann durch Variation der Druckparameter beeinflusst werden (Bahnbreite b, Schichtdicke h). Damit kann die zur Verfügung stehende Leiterlänge variiert werden, um diese im Sinne bestmöglicher Abdeckung auf dem Membranquerschnitt anzuordnen. Wird die Leiteranordnung in Form einer Spirale auf den Membranquerschnitt verteilt, können Risse, die konzentrisch zum Leiter verlaufen, nicht erkannt werden. Andererseits sind die Leiter, wenn sie von außen zur Mitte verlaufen, einer großen Dehnung ausgesetzt, die sich nachteilig auf die Lebensdauer auswirkt. Daher kann ein Kompromiss gefunden werden, wenn die einzelnen Elemente von außen zur Mitte bogenförmig verlaufen (siehe Figur 4). Die membranintegrierten Leiter können durch leitfähigen Kleber am Rand der Membrane kontaktiert werden und von dort durch Kabel mit der Auswerte-Einheit verbunden werden.

Zur Erkennung des Rissfortschritts bzw. der Risstiefe können zwei oder mehrere Leiteranordnungen in übereinander liegenden Ebenen eingebracht werden. Wenn die Membranüberwachung lediglich den Riss der untersten Leiteranordnung meldet, kann die Membrane je nach Anwendung noch längere Zeit weiter verwendet werden. Die Anlage muss nicht sofort gestoppt werden sondern die Instandsetzung kann zu betriebsverträglichen Zeiten eingeplant werden. Erst wenn die zweite oder dritte Leiteranordnung reißt, muss ein Tausch der Membrane zwingend erfolgen.

Durch einen Riss in der Membrane wird der Stromkreis der Leiteranordnung unterbrochen, was einen starken Anstieg des Widerstands auf einen (theoretisch) unendlichen Wert hervorruft. Zur Auswertung kann im einfachsten Fall eine Spannungsquelle direkt mit der Leiteranordnung verbunden werden.

Bei einer Spannung von 12 V kann der Widerstand der unversehrten Leiteranordnung ein Stromsignal von 20 mA hervorrufen. Dazu kann der Widerstand des Leiters $R = 600\ \Omega$ betragen. Wenn der Leiter durch einen Riss Membrane zu reißen beginnt, steigt der elektrische Widerstand und das Stromsignal geht gegen null. Allerdings lässt sich mit der Auswertung des Widerstands nicht auf eine Dehnung schließen, weil der gemessene Widerstand neben dem Einfluss der Dehnung weiteren Einflüssen aus der Umgebung unterliegt.

Die Temperatur wirkt sich wegen des Thermowiderstandseffekts auf den Widerstand des Leiters aus. Außerdem verursacht die Temperatur eine Wärmeausdehnung (des Leiter- und Trägermaterials), die wegen des resistiven Effekts eine Änderung des Widerstands bewirkt. Die Dehnung ε wird durch den Schaltzustand und den Betriebsdruck des Ventils beeinflusst. Eine lokal überhöhte Dehnung infolge eines Risses verursacht im betreffenden Leiterabschnitt einen unendlich hohen Widerstand. Der materialspezifische Teil, die Änderung des spezifischen Widerstands, kann sich infolge von Alterungsprozessen ändern, wenn bspw. die Konzentration der leitenden Partikel in der Tinte abnimmt. Damit würde die Alterung des Leitermaterials messbar werden, wenn die alterungsbedingte Änderung des spezifischen Widerstands als Messgröße gewählt wird. Unter der Voraussetzung, dass die Alterung des Membranwerkstoffs und die Alterung des Leitermaterials gleichen Einflüssen unterliegen und ähnlich groß sind, kann damit auch die Alterung des Membranwerkstoffs erfasst werden. Prinzipiell wäre die Messung aller dieser Größen (der Alterung, der Temperatur, des Schaltzustands und des Betriebsdruck) eine interessante Information, jedoch muss gemäß der Aufgabe die Entscheidung für eine Messgröße fallen.

Anforderungsgemäß werden ein Riss und die alterungsbedingte Änderung als Messgrößen festgelegt. Dann ist die Temperatur als Störgröße anzusehen, die kompensiert werden muss. Der Betriebsdruck ist mit der Membrane auf keinen Fall messbar und stellt ebenfalls eine Störgröße dar. Der Schaltzustand wäre allerdings eine interessante Information, er ist aber wie der Betriebsdruck als Störgröße anzusehen.

Für die Messaufgabe kann die in Figur 6 dargestellte Leiteranordnung mithilfe der Wheatstone'schen Brückenschaltung (Figur 7) ausgewertet werden.

Die Einflussgrößen können mithilfe der Wheatstone- Brückenschaltung folgendermaßen als Messgrößen bzw. als Störgrößen ausgenutzt werden. Die dehnungsabhängige Komponente des Widerstands der Leiteranordnung kompensiert werden könnte, wenn alle vier Widerstände der betragsmäßig gleichen, gleichsinnigen Dehnung unterliegen oder wenn paarweise zwei Widerstände der betragsmäßig gleichen, gleichsinnigen Dehnung unterliegen. Damit wird gleichermaßen die Dehnung durch den Betriebsdruck und die Dehnung durch den Schaltzustand kompensiert. Weiterhin kann dadurch die temperaturbedingte Widerstandsänderung und die Widerstandsänderung infolge von Wärmeausdehnung kompensiert werden, indem alle vier Widerstände demselben Temperatureinfluss unterliegen. Das kann erreicht werden, wenn sich jeder Leiter über beide Kammern der Membrane erstreckt. Dann erhitzt einseitig anstehendes Medium mit höherer Temperatur alle Leiter gleich stark. Wenn alle vier Widerstände gleich hergestellt werden, unterliegt das Material den gleichen Alterungseffekten. Dadurch würde die alterungsbedingte Änderung des spezifischen Widerstands kompensiert werden.

Damit die Alterungseffekte messbar werden, müssten zwei Widerstände mit alterungsbedingt veränderlichen spezifischen Widerstand gefertigt werden und zwei Widerstände müssten einen konstanten spezifischen Widerstand besitzen.

Der spezifische Widerstand kann nicht durch die Druckparameter verändert werden, sondern durch eine Variation der Konzentration an leitenden Partikeln in der Tinte. Möglicherweise wird durch die Erhöhung der Konzentration der spezifische Widerstand bis zu einem gewissen Punkt konstant. Zumindest kann erwartet werden, dass sich der spezifische Widerstand bei höherer Konzentration langsamer ändert als bei niedriger Konzentration. Ein Riss in einem der vier Leiterteile verursacht einen unendlich hohen Widerstand des betroffenen Abschnitts. Durch die Brückenschaltung werden die Änderungen des Widerstands in eine Änderung der Diagonalspannung UA umgewandelt.

Die vier Leiterabschnitte R1-R4 in Figur 6 werden so miteinander verbunden, dass die Messung der Messgrößen und die Kompensation der Störgrößen wie gewünscht stattfinden. In dem dargestellten Ausführungsbeispiel wird die Verschaltung dadurch erreicht, dass je ein Ende von R3 und R4 in der oberen Ebene und von R1 und R2 in der unteren Ebene miteinander verbunden werden und an den beiden Verbindungspunkten kann die Ausgangsspannung UA abgegriffen werden kann. Darüber hinaus werden die übrigen Enden durch eine Verbindung zwischen der unteren und der oberen Ebene verbunden, indem R1 mit R4 und R2 mit R3 verbunden werden. An diesen beiden Verbindungspunkten wird die Eingangsspannung eingespeist.

Im Gegensatz zu der Widerstandsänderung durch einen Riss verläuft die alterungsbedingte Widerstandsänderung langsam und stetig ab. Angenommen der spezifische Widerstand der Widerstände R1 und R3 nimmt durch die Alterung um 10% zu und der spezifische Widerstand der Widerstände R2 und R4 bleibt konstant, dann wird eine spezifische Ausgangsspannung von -0,48 V messbar (vgl. Tabelle 1). Auch in Kombination mit einem Riss bleibt die Alterung messbar, solange nicht die Widerstände R1 und R3 gleichzeitig reißen. Bei einem Aufriss der Membrane kann der Widerstand eines Leiterabschnitts drastisch sinken, wenn zwei Teile eines Leiters durch das eindringende, leitfähige Medium verbunden werden. Das hat abhängig von der Position des Aufrisses ein unterschiedliches negatives Spannungssignal zur Folge, das sich von den anderen Signalen unterscheidet und daher durch die Auswertung der Spannung erkannt werden kann. Die Dehnung wird genau wie die Temperatur auch im Ausführungsbeispiel kompensiert.

Es wird eine Auswertung benötigt, die das gemessene Spannungssignal in Abhängigkeit von der Betriebsspannung und unter Berücksichtigung des Spannungsverlaufs und der Änderungsgeschwindigkeit interpretiert.

Exemplarisch wurden für eine Membran mit dem in den Figuren 6 & 7 dargestellten Messschema folgende Szenarien ermittelt.

Tabelle 1

| | | |
|---|---|---|
| *Betriebsspannung [V]* | 10 | $\dfrac{U_A}{U_B} = \dfrac{R_2 \cdot R_4 - R_1 \cdot R_3}{(R_1 + R_2) \cdot (R_3 + R_4)}$ |
| *K-Faktor* | 18 | |
| *Riss-Widerstand [Ω]* | 1000000 | |

(fortgesetzt)

| Szenario | Abschnitt | ohne Alterung | | | kombiniert mit Alterung Änderung ρ 0,1 | | |
|---|---|---|---|---|---|---|---|
| | | Widerstand [Ω] | UA/UB | UA[V] | Widerstand [Ω] | UA/UB | UA[V] |
| Gut-Zustand | R1 | 200 | | | 220 | | |
| | R2 | 200 | 0,00 | 0,00 | 200 | -0,05 | -0,48 |
| | R3 | 200 | | | 220 | | |
| | R4 | 200 | | | 200 | | |
| Dehnung um 1,5% | R1 | 254 | | | 279 | | |
| | R2 | 254 | 0,00 | 0,00 | 254 | -0,05 | -0,48 |
| Dehnung um 2,5% | R3 | 290 | | | 319 | | |
| | R4 | 290 | | | 290 | | |
| flacher Riss links | R1 | 1000000 | -0,50 | -5,00 | 1000000 | -0,52 | -5,24 |
| flacher Riss rechts | R2 | 1000000 | 0,50 | 5,00 | 1000000 | 0,48 | 4,76 |
| Position l. flach + tief | R1 | 1000000 | | | 1000000 | | |
| | R3 | 1000000 | -1,00 | -10,00 | 1000000 | -1,00 | -10,00 |
| Position r. flach + tief | R2 | 1000000 | | | 1000000 | | |
| | R4 | 1000000 | 1,00 | 10,00 | 1000000 | 1,00 | -10,00 |
| zwei flache Risse | R1 | 1000000 | 0,00 | 0,00 | 1000000 | -0,02 | -0,24 |
| | R2 | 1000000 | | | 1000000 | | |
| Position l. flach, Position r. flach + tief | R1 | 1000000 | | | 1000000 | | |
| | R2 | 1000000 | 0,50 | 5,00 | 1000000 | 0,50 | 5,00 |
| | R4 | 1000000 | | | 1000000 | | |
| Position l. flach + tief, Position r. flach | R1 | 1000000 | | | 1000000 | | |
| | R3 | 1000000 | -0,50 | -5,00 | 1000000 | -0,50 | -5,00 |
| | R2 | 1000000 | | | 1000000 | | |
| Position l.+r. flach+tief | R1 | 1000000 | | | 1000000 | | |
| | R2 | 1000000 | 0,00 | 0,00 | 1000000 | 0,00 | 0,00 |
| | R3 | 1000000 | | | 1000000 | | |
| | R4 | 1000000 | | | 1000000 | | |
| Aufriss bis zum Leiter | R1 | 50 | 0,30 | 3,00 | 55 | 0,26 | 2,61 |
| | R2 | 190 | 0,01 | 0,13 | 209 | -0,03 | -0,35 |

Figur 8 zeigt eine Draufsicht auf eine Membran 5. Die Membran 5 weist einen äußeren Bereich 18 auf, der einen kreisförmigen inneren Bereich umgibt. Eine äußere Dichtlippe 19 dient einer Abdichtung des Gehäuses. Zum Einspannen ist die Membran mit Öffnungen 20 versehen, durch die Befestigungsmittel gesteckt werden. Der äußere Bereich 18 der Membran 5, der auch als Lappen bezeichnet wird, bildet eine Fahne 21 aus. Die Fahne 21 kann eine Kennzeichnung zur Identifizierung der Membran 5 aufweisen.


**Patentansprüche**

1.   Membran (5) für Membranventile, Membranpumpen oder Membranantriebe, wobei die Membran (5) eine geschlossene Membran ist, wobei die Membran (5) eine Anordnung umfasst, die leitfähige Strukturen (16) aufweist, wobei an den leitfähigen Strukturen (16) mindestens vier elektrische Kontaktierungen vorgesehen sind, wobei zwischen den elektrischen Kontaktierungen elektrotechnische Messgrößen ermittelbar sind

**dadurch gekennzeichnet,**
**dass** die leitfähigen Strukturen (16) auf einem Material basieren, das sich bei Kontakt mit dem Arbeitsfluid auflöst.

2. Membran nach Anspruch 1, **dadurch gekennzeichnet, dass** die leitfähigen Strukturen (16) durch eine Tinte erzeugt sind, die eine Suspension von Partikeln eines elektrisch leitfähigen Werkstoffs und/oder einer Vorläuferverbindung für einen elektrisch leitfähigen Werkstoff in einem Lösemittel ist.

3. Membran nach Anspruch 2, **dadurch gekennzeichnet, dass** das Lösemittel Wasser ist.

4. Membran nach einem der Ansprüche 1 bis 3, **dadurch gekennzeichnet, dass** die leitfähigen Strukturen (16) auf einer medienberührenden Lage (11), auf deren medienabgewandten Seite angeordnet sind.

5. Membran nach einem der Ansprüche 1 bis 4, **dadurch gekennzeichnet, dass** die leitfähigen Strukturen (16) auf einer Trägerfolie angeordnet sind, die zwischen Lagen (11, 12) der Membran (5) angeordnet sind.

6. Membran nach einem der Ansprüche 1 bis 5, **dadurch gekennzeichnet, dass** die leitfähigen Strukturen (16) auf einer Gewebeeinlage (13) der Membran (5) angeordnet sind.

7. Membran nach einem der Ansprüche 1 bis 6, **dadurch gekennzeichnet, dass** die leitfähigen Strukturen (16) in mindestens zwei Segmente aufgeteilt sind.

8. Membran nach einem der Ansprüche 1 bis 7, **dadurch gekennzeichnet, dass** die leitfähigen Strukturen in mindestens zwei Ebenen aufgeteilt sind.

9. Membran nach einem der Ansprüche 1 bis 8, **dadurch gekennzeichnet, dass** die leitfähigen Strukturen (16) in Betätigungsrichtung der Membran (5) ausgerichtet sind.

10. Membran nach einem der Ansprüche 1 bis 9, **dadurch gekennzeichnet, dass** die elektrischen Kontaktierungen als Brückenschaltung (R1, R2, R3, R4) ausgeführt sind.

11. Membran nach Anspruch 10, **dadurch gekennzeichnet, dass** die konkreten Messwerte (UA, UB) der Brückenschaltung (R1, R2, R3, R4) spezifischen Zuständen der Membran (5) zuordenbar sind.

12. Verfahren zur Herstellung einer Membran nach einem der Ansprüche 1 bis 11, **dadurch gekennzeichnet, dass** durch Aufbringen einer Tinte leitfähige Strukturen erzeugt werden, wobei für die leitfähigen Strukturen ein Material bereitgestellt wird, das sich bei Kontakt mit dem Arbeitsfluid auflöst.

13. Verfahren nach Anspruch 12, **dadurch gekennzeichnet, dass** zu spezifischen Zuständen der Membran (5) die Messwerte (UA, UB) der Brückenschaltung (R1, R2, R3, R4) ermittelt werden, wobei die spezifischen Zustände Alterung und/oder Rissfortschritt und/oder Rissposition abbilden.

14. Verwendung einer Tinte zur Erzeugung von leitfähigen Strukturen (16) in einer Membran (5) nach einem der Ansprüche 1 bis 11.


**Claims**

1. Diaphragm (5) for diaphragm valves, diaphragm pumps or diaphragm actuators, wherein the diaphragm (5) is a closed diaphragm, wherein the diaphragm (5) comprises an arrangement that has conductive structures (16) and wherein at least four electrical contactings are provided on the conductive structures (16), wherein electrotechnical measured variables can be determined between the electrical contactings, **characterized in that** the conductive structures (16) are based on a material that dissolves when it comes into contact with the working fluid.

2. Diaphragm according to Claim 1, **characterized in that** the conductive structures (16) are produced by an ink which is a suspension of particles of an electrically conductive material and/or of a precursor compound for an electrically conductive material in a solvent.

3. Diaphragm according to Claim 2, **characterized in that** the solvent is water.

4. Diaphragm according to one of Claims 1 to 3, **characterized in that** the conductive structures (16) are arranged on a layer (11) in contact with the media, on the side thereof facing away from the media.

5. Diaphragm according to one of Claims 1 to 4, **characterized in that** the conductive structures (16) are arranged on a carrier film which is arranged between layers (11, 12) of the diaphragm (5).

6. Diaphragm according to one of Claims 1 to 5, **characterized in that** the conductive structures (16) are arranged on a fabric inlay (13) of the diaphragm (5) .

7. Diaphragm according to one of Claims 1 to 6, **characterized in that** the conductive structures (16) are divided into at least two segments.

8. Diaphragm according to one of Claims 1 to 7, **characterized in that** the conductive structures are divided into at least two planes.

9. Diaphragm according to one of Claims 1 to 8, **characterized in that** the conductive structures (16) are aligned in the direction of actuation of the diaphragm (5).

10. Diaphragm according to one of Claims 1 to 9, **characterized in that** the electrical contactings are configured as a bridge circuit (R1, R2, R3, R4).

11. Diaphragm according to Claim 10, **characterized in that** the specific measured values (UA, UB) of the bridge circuit (R1, R2, R3, R4) are assignable to specific states of the diaphragm (5).

12. Method for producing a diaphragm according to one of Claims 1 to 11, **characterized in that** conductive structures are produced by applying an ink, wherein a material that dissolves when it comes into contact with the working fluid is provided for the conductive structures.

13. Method according to Claim 12, **characterized in that** the measured values (UA, UB) of the bridge circuit (R1, R2, R3, R4) are determined for specific states of the diaphragm (5), wherein the specific states represent ageing and/or the progression and/or position of cracking.

14. Use of an ink for producing conductive structures (16) in a diaphragm (5) according to one of Claims 1 to 11.


**Revendications**

1. Membrane (5) pour soupapes à membrane, pompes à membrane ou actionneurs à membrane, la membrane (5) étant une membrane fermée, la membrane (5) comportant un agencement qui comprend des structures conductrices (16), au moins quatre contacts électriques étant prévus au niveau des structures conductrices (16), des grandeurs de mesure électrotechniques pouvant être déterminées entre les contacts électriques, **caractérisée en ce que** les structures conductrices (16) sont à base d'un matériau qui se dissous au contact du fluide de travail.

2. Membrane selon la revendication 1, **caractérisée en ce que** les structures conductrices (16) sont générées par une encre, qui est une suspension de particules d'un matériau électriquement conducteur et/ou d'un composé précurseur d'un matériau électriquement conducteur dans un solvant.

3. Membrane selon la revendication 2, **caractérisée en ce que** le solvant est l'eau.

4. Membrane selon l'une quelconque des revendications 1 à 3, **caractérisée en ce que** les structures conductrices (16) sont agencées sur une couche en contact avec un milieu (11), sur son côté détourné du milieu.

5. Membrane selon l'une quelconque des revendications 1 à 4, **caractérisée en ce que** les structures conductrices (16) sont agencées sur un film support, qui est agencé entre des couches (11, 12) de la membrane (5).

6. Membrane selon l'une quelconque des revendications 1 à 5, **caractérisée en ce que** les structures conductrices (16) sont agencées sur un insert de tissu (13) de la membrane (5).

7. Membrane selon l'une quelconque des revendications 1 à 6, **caractérisée en ce que** les structures conductrices (16) sont divisées en au moins deux segments.

8. Membrane selon l'une quelconque des revendications 1 à 7, **caractérisée en ce que** les structures conductrices sont divisées en au moins deux plans.

9. Membrane selon l'une quelconque des revendications 1 à 8, **caractérisée en ce que** les structures conductrices (16) sont orientées dans la direction d'actionnement de la membrane (5).

10. Membrane selon l'une quelconque des revendications 1 à 9, **caractérisée en ce que** les contacts électriques sont réalisés sous la forme d'un circuit en pont (R1, R2, R3, R4).

11. Membrane selon la revendication 10, **caractérisée en ce que** les valeurs de mesure concrètes (UA, UB) du circuit en pont (R1, R2, R3, R4) peuvent être associées à des états spécifiques de la membrane (5).

12. Procédé de fabrication d'une membrane selon l'une quelconque des revendications 1 à 11, **caractérisé en ce que** des structures conductrices sont générées par application d'une encre, un matériau qui se dissous au contact du fluide de travail étant mis à disposition pour les structures conductrices.

13. Procédé selon la revendication 12, **caractérisé en ce que** les valeurs de mesure (UA, UB) du circuit en pont (R1, R2, R3, R4) sont déterminées pour des états spécifiques de la membrane (5), les états spécifiques représentant un vieillissement et/ou une propagation de fissures et/ou une position de fissures.

14. Utilisation d'une encre pour la génération de structures conductrices (16) dans une membrane (5) selon l'une quelconque des revendications 1 à 11.

Fig. 1

Fig. 2

Fig. 3

16

Fig. 4

-->X

Fig. 5

Fig. 6

# Fig. 7

Fig. 8

**IN DER BESCHREIBUNG AUFGEFÜHRTE DOKUMENTE**

**In der Beschreibung aufgeführte Patentdokumente**

- DE 19505747 A1
- DE 102009023012 A1
- DE 102014205117 A1
- DE 4027027 C2
- EP 0715690 B1
- US 4569634 A
- DE 10024118 A1
- DE 10323059 A1
- WO 2012035291 A